# EUROPEAN PATENT APPLICATION

(11) **EP 1 980 527 A1**
(43) Date of publication of application: **15.10.2008**
(21) Application number: 07707518.2
(22) Date of filing: 26.01.2007
(51) Int. Cl.: C01B 11/04, C02F 1/46, C25B 1/26, C25B 11/10

(54) **METHOD AND APPARATUS FOR SYNTHESIZING HYPOCHLOROUS ACID**

(30) Priority: 30.01.2006 JP 2006020597
(71) Applicant: OSAKA Titanium Technologies Co., Ltd., Amagasaki-shi, Hyogo 660-8533 (JP)
(72) Inventor: AZUMA, Kazuomi,, Amagasaki-shi Hyogo 660-8533 (JP); OGASAWARA, Tadashi, Amagasaki-shi Hyogo 660-8533 (JP); SHIMOSAKI, Shinji,, Amagaski-shi Hyogo 660-8533 (JP); KATAKURA, Katsumi, Nara 639-1001 (JP)
(74) Representative: Hartz, Nikolai
(86) International application number: PCT/JP2007/051286
(87) International publication number: WO 2007/086517

(57) **Abstract**

Hypochlorous acid is produced economically without the supply of electricity energy from outside. To actualize the production, a photoelectric cell having a titanium oxide electrode 1 and a counter electrode 2 is placed in an electrolyte solution 3 containing a metal chloride. Under the environment that oxygen can be supplied to the counter electrode 2 of the photoelectric cell in the electrolyte solution 3, the titanium oxide electrode 1 is irradiated with light.

## Description

### TECHNICAL FIELD

The present invention relates to a hypochlorous acid synthesis method and apparatus for producing hypochlorous acid (HClO) or a hypochlorite ion (ClO⁻) from a metal chloride such as NaCl, more particularly, a hypochlorous acid synthesis method and apparatus for economically producing hypochlorous acid (HClO) or a hypochlorite ion (ClO⁻) using a photoelectric cell with no need of electric power. In this specification, unless otherwise specified, hypochlorous acid means both HClO and ClO⁻.

### BACKGROUND ART

Hypochlorous acid has strong disinfecting power and has been used for the disinfection of, for example swimming pool water. As a method for producing hypochlorous acid, there is an electrolysis method and a disinfection apparatus for generating hypochlorous acid by electrolysis is commercialized for swimming pools or the like.

In the electrolytic production method of hypochlorous acid, an electrolyte solution (e.g. an aqueous NaCl solution) containing a metal chloride is electrolyzed to generate hypochlorous acid in an anode side. In Patent Document 1, titanium oxide is used as an electrode material to be used for the electrolytic production of hypochlorous acid. The superiority of titanium dioxide as the electrode material has been proved in various spheres.

Patent Document 1: Japanese Patent Application Publication (JP-B) No. 2-25994

In the electrolytic production method of hypochlorous acid, a large quantity of electricity is required regardless of an electrode material and it is inevitable that it costs much for an electric power facility, electric power charge, and the like. In addition, with respect to a disinfection apparatus for swimming pool water, a disinfection apparatus is placed in a site apart from a swimming pool and the swimming pool water is send to the disinfection apparatus, treated with hypochlorous acid electrolytically produced by the disinfection apparatus, and then turned back to the swimming pool. That is, disinfection treatment is not carried out in the swimming pool. Therefore, the facility is complicated and enlarged and thus cost up is inevitable.

On the other hand, with respect to titanium oxide to be used for an electrode material in the Patent Document 1, it has a photo-semiconductive effect, and a redox phenomenon and electric power generation function attributed to the effect has been known as Honda/Fujishima effect. A photoelectric cell using titanium oxide based on the Honda/Fujishima effect is described in, for example, Patent Document 2.

Patent Document 2: Japanese Patent Application Laid-Open (JP-A) No. 50-124584

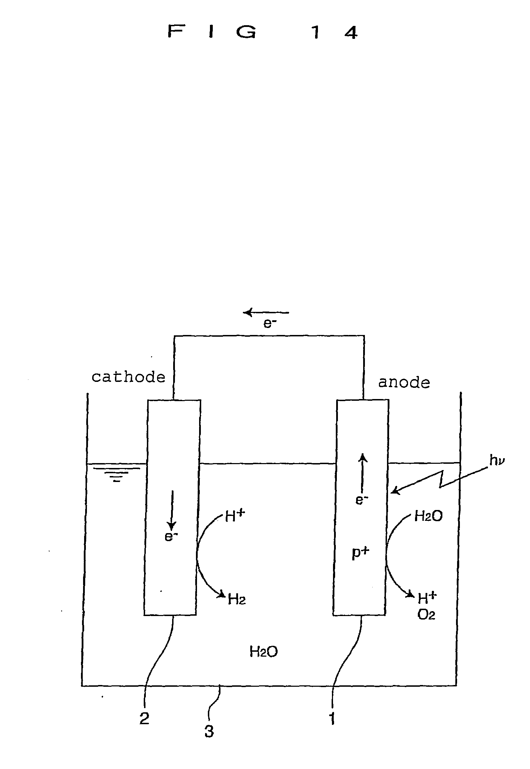

In a photoelectric cell using the photo-semiconductive effect of titanium oxide, which is an n-type semiconductor, as shown in Fig. 14, a titanium oxide electrode 1 and a counter electrode 2 electrically connected to each other are immersed in water, which is an active material 3, and in such a state, light energy is applied to the titanium oxide electrode 1. Accordingly, a reaction defined by the following chemical formula 1 is promoted on the titanium oxide electrode 1, which is an anode, and the counter electrode 2, which is a cathode.

[Chemical Formula 1]
titanium oxide electrode side
H₂O + hv → H₂ + 1/2 O₂
TiO₂ + 2hv → 2e⁻ + 2p⁺
2p⁺+H₂O → 1/2 O₂ + 2H⁺
counter electrode
2e⁻ + 2H⁺ → H₂

On the titanium oxide electrode 1, which is an anode, a positive hole (p⁺) and an electron (e⁻) are generated by light irradiation and the generated positive hole (p⁺) is reacted with a water molecule (H₂O) to produce oxygen gas (O₂). The generated electron (e⁻) moves to the counter electrode 2, a cathode. In the counter electrode 2, the electron (e⁻) is bonded with a hydrogen ion (H⁺) to produce hydrogen gas (H₂). In such a manner, the electron moves from the titanium oxide electrode 1 to the counter electrode 2 to generate electric power.

As an active material other than water, an aqueous electrolyte solution such as an aqueous sodium chloride solution is exemplified in Patent Document 2.

### DISCLOSURE OF THE INVENTION

### PROBLEM TO BE SOLVED BY THE INVENTION

An object of the present invention is to provide a hypochlorous acid synthesis method and apparatus for economically producing hypochlorous acid with no need of supplying electric energy from outside or by using an electric power source such as a solar cell. Another object of the present invention is to provide a hypochlorous acid synthesis method and apparatus by which a facility structure can be remarkably simplified.

### MEANS FOR SOLVING THE PROBLEMS

In order to economically produce hypochlorous acid, the inventors of the present invention paid attention to a photoelectric cell using the photo-semiconductive effect of titanium oxide, particularly to electrolytic reaction derived from power generation reaction of titanium oxide.

That is, with respect to the photoelectric cell using the photo-semiconductive effect of titanium oxide, so far, the power generation reaction has been employed. However, as found from the chemical formula 1, electrolysis reaction of water, which is an active material, is caused along with the power generation reaction. The inventors of the present invention paid attention to possibility of causing electrolysis and producing hypochlorous acid with no need of supplying electric power energy from the outside if water is changed to an aqueous metal chloride solution such as an aqueous sodium chloride solution.

From such a new point of view, the inventors of the present invention have repeatedly made analysis and discussion of a photoelectric cell in an aqueous metal chloride solution and electrolysis experiments. As a result, the inventors have come to the following unexpected fact. At first, in the comparison of cases of using water and of using an aqueous metal chloride solution, as an active material in a photoelectric cell, electrolysis reaction configurations considerably differ. Secondly, as a result of the different electrolysis reaction configurations, in the case of using the aqueous metal chloride solution, although hypochlorous acid is generated, the reaction rate is low. Thirdly, to efficiently continue hypochlorous acid production reaction, a special addition condition in which oxygen is supplied to the counter electrode from outside is required. Fourth, the production efficiency of hypochlorous acid is increased by combining an auxiliary outside electric power source such as a solar cell with a photoelectric cell. The combination of the outside electric power source is particularly efficient in the case where titanium oxide electrode in the photoelectric cell is a porous body. Fifth, it may be possible that besides hypochlorous acid, another strong oxidizing agent (ozone, hydrogen peroxide, etc.) is produced. This oxidizing agent is effective for anti-algae, disinfection functions, and the like.

The hypochlorous acid synthesis method of the present invention is accomplished on the basis of the above-mentioned findings, and is the method in which a photoelectric cell having a titanium oxide electrode and a counter electrode is placed in an electrolyte solution containing a metal chloride, and the titanium oxide electrode is irradiated with light while oxygen is supplied to the counter electrode of the photoelectric cell in the electrolyte solution, thereby HClO (hypochlorous acid) or ClO⁻ (hypochlorite ion) is generated from the titanium oxide electrode.

Further, the hypochlorous acid synthesis apparatus of the present invention is a hypochlorous acid synthesis apparatus for producing HClO (hypochlorous acid) or ClO⁻ (hypochlorite ion) from a metal chloride including a container for storing the electrolyte solution containing a metal chloride and a photoelectric cell which has a titanium oxide electrode and a counter electrode and is immersed in the electrolyte solution in the container under an environment in which the titanium oxide electrode is irradiated with light and oxygen is supplied to the counter electrode.

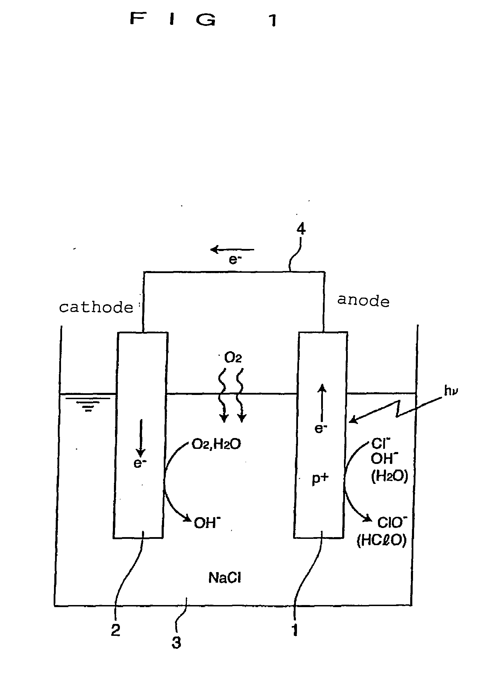

The reaction in the hypochlorous acid synthesis method and apparatus of the present invention will be described with reference to Fig. 1 in the case of using an aqueous sodium chloride solution as the electrolyte solution. Further, the reactions in a titanium oxide electrode and a counter electrode are shown as a chemical formula 2.

[Chemical Formula 2]
titanium oxide electrode side
TiO₂ + 2hv → 2e⁻ + 2p⁺
Cl⁻ + 2OH⁻ + 2p⁺ → ClO⁻ + H₂O
(or Cl⁻ + H₂O+2p⁺ → HClO + H⁺)
counter electrode side
O₂ + 2H₂O + 4e⁻ → 4OH⁻

A titanium oxide electrode 1 and a counter electrode 2 electrically connected with an outside circuit 4 are immersed in an aqueous chloride solution, which is an active material 3, and in this state, light energy is applied to the titanium oxide electrode 1. As a result, on the titanium oxide electrode 1 side, a positive hole (p⁺) and an electron (e⁻) are generated by light irradiation and the generated positive hole (p⁺) is reacted with a chloride ion (Cl⁻) and further with water (H₂O) or a hydroxy ion (OH⁻) to generate HClO (hypochlorous acid) or ClO⁻ (hypochlorite ion). On the other hand, on the counter electrode 2 side, an electron (e⁻) moved from the titanium oxide electrode 1 is reacted with a water molecule (H₂O) and an oxygen molecule (O₂) to produce a hydroxy ion (OH⁻). Accordingly, an electron (e⁻) moves from the titanium oxide electrode 1 to the counter electrode 2 and the production of hypochlorous acid in the titanium oxide electrode 1 is continued. More particularly, on a side where the aqueous solution is acidic, HClO (hypochlorous acid) is produced and on an alkaline side, ClO⁻ (hypochlorite ion) is produced.

Herein, a notable characteristic is the reaction on the counter electrode 2 side and an oxygen molecule (O₂) is required besides a water molecule (H₂O) to accomplish the reaction. The oxygen molecule exists in the form of dissolved oxygen in the electrolyte solution, however the oxygen molecule concentration is low and an oxygen molecule has to be supplied from outside. In other words, without supplying an oxygen molecule from the outside, this reaction is not carried out or continued. Therefore, in the hypochlorous acid synthesis method and apparatus of the present invention, oxygen supply to the titanium oxide electrode is an indispensable environment and it is not until establishment of the environment that the production of hypochlorous acid is made possible without an electric power source.

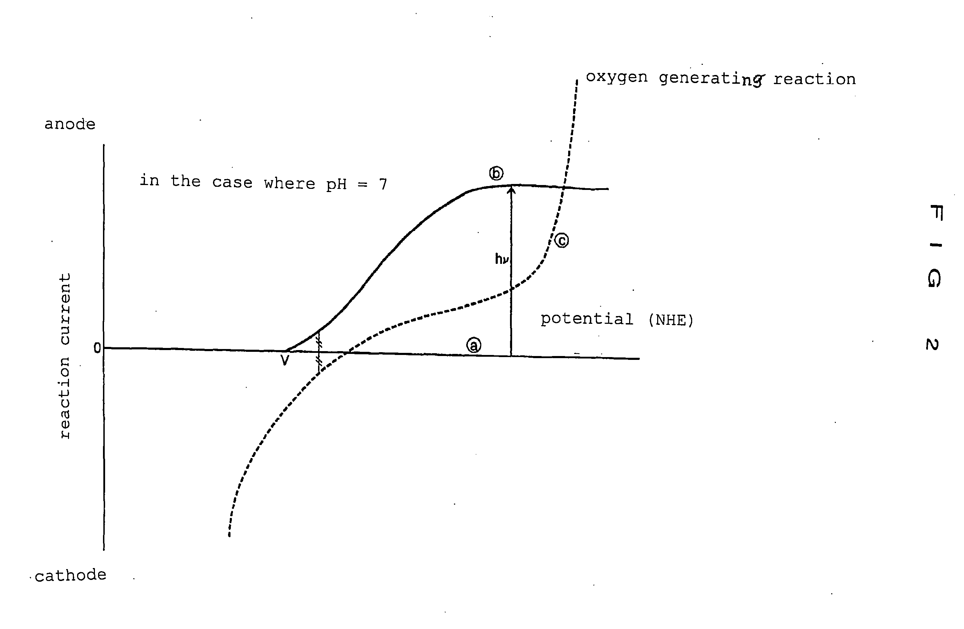

The relation of electrode potential and current in the hypochlorous acid synthesis method and apparatus of the present invention is shown in Fig. 2. Herein, a broken line (c) in Fig. 2 shows a counter electrode side. Further, a continuous line shows the titanium oxide electrode side, which is an n-type semiconductor, and a continuous line (a) shows the case of no light irradiation and a continuous line (b) shows the case of light irradiation. In the titanium oxide anode, the energy level is increased by light irradiation (a→b) and current flows between the titanium oxide anode (b) and the counter electrode (c) with no need of an outside electric source. The current value is a value in which the values on the counter electrode side and the titanium oxide electrode side are equal and is increased corresponding to the rise of the energy level on the titanium oxide electrode side. V in Fig. 2 is a flat band potential intrinsic for the titanium oxide electrode, which is an n-type semiconductor.

A different point of this case from the case where the active material is water, that is, the case of a simple photoelectric cell using the photo-semiconductive effect of titanium oxide, as described above, is an oxygen molecule (O₂) is required besides a water molecule (H₂O) on the counter electrode.

As found from the above description, in the hypochlorous acid synthesis method and apparatus of the present invention, it is important that the photoelectric cell is utilized for producing hypochlorous acid and also that an environment capable of supplying oxygen to the counter electrode is assured. The environment capable of supplying oxygen to the counter electrode can be generated by bubbling oxygen-containing gas such as air through the electrolyte solution and preferably bubbling near the counter electrode. In the case where an aperture part of the container for storing the electrolyte solution is wide, that is, the contact face (liquid surface) of the electrolyte solution with outer air is wide, the efficient natural supply of the oxygen-containing gas from the liquid face is possible and therefore, it corresponds to the environment. A typical case for the latter environment is a swimming pool. Further, stirring of the electrolyte solution also meets the environment. By stirring the electrolyte solution, outer air is efficiently taken in the solution from the solution surface. No need to say, the combination of them is efficient.

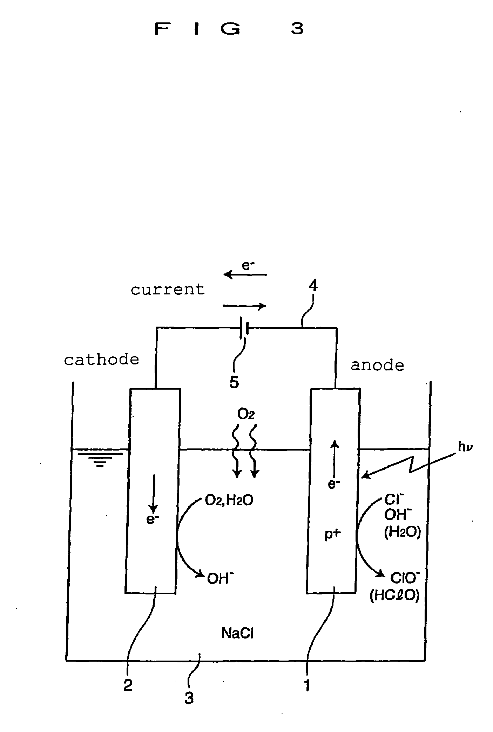

Fig. 3 is a schematic view showing a cell and electrolysis reaction using an outside electric power source. An auxiliary outside electric power source 5 such as a solar cell is inserted in the outside circuit 4 electrically connecting the titanium oxide electrode 1 and the counter electrode 2. The polarity of the outside electric power source 5 is set to promote electron transfer (current flowing) in the outside circuit 4. The impressed current by the outside electric power source 5 increases the production efficiency of hypochlorous acid in the titanium oxide electrode 1 and the reason for that is supposedly attributed to the following.

In the hypochlorous acid synthesis method and apparatus of the present invention, as described above, hypochlorous acid is produced on the titanium oxide electrode 1 side by the generation of current corresponding to the potential (electrode potential) between the titanium oxide electrode 1 and the counter electrode 2. When the outside electric power source 5 is inserted in the outside circuit 4, electrode potential is forcibly increased. Owing to the increase of the electrode current thus caused, the production efficiency of hypochlorous acid is increased. The effect of the addition of the outside electric power source 5 is affected by the type of the titanium oxide electrode 1 and it will be described later.

The titanium oxide electrode is typically a coated plate obtained by coating the surface of a conductive substrate with TiO₂. The conductive substrate may be of any material and may be an iron plate or the like, however in terms of corrosion resistance, or the like, a titanium plate is preferable and one which is obtained by sintering titanium particles such as spherical titanium particles in a plate form is particularly preferable in terms of a large surface are and a large reactive area. A method of applying TiO₂ is not particularly limited and may be a chemical method such as CVD and simple application.

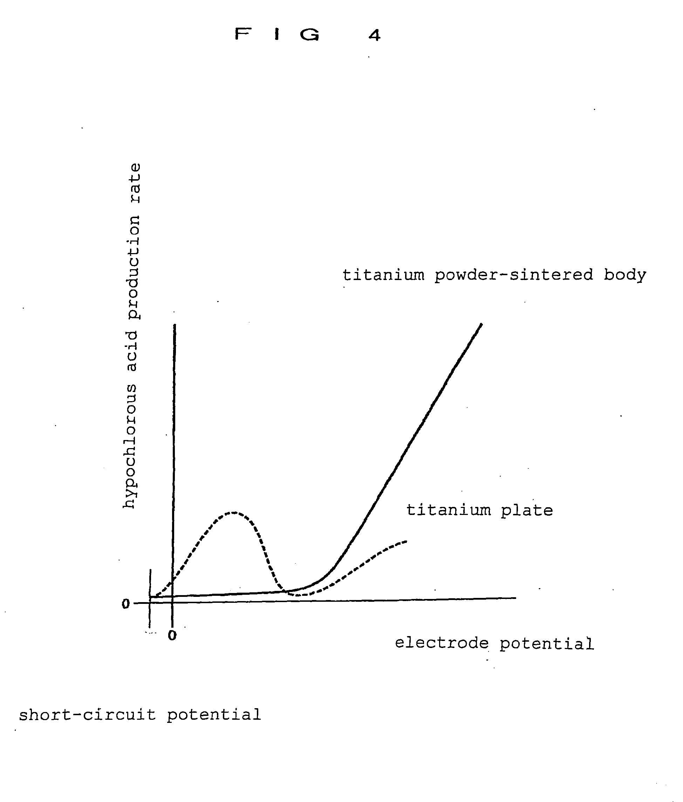

Fig. 4 is a graph schematically showing the relation of the electrode potential and the production amount of hypochlorous acid in the case of using no outside electric power source (short-circuiting state) and in the case of using an outside electric power source (impressed current). In the case where the electrode potential is made high by the outside electric power source added to the outside circuit, the production amount of hypochlorous acid is increased more as the potential is made higher in both of a case where titanium oxide is a bulk material such as a plate and a case where titanium oxide is a porous body such as a spherical titanium powder-sintered body. However, the tendency differs significantly.

As described more substantially, when the electrode potential is made high by adding an outside electric power source, at a relatively low potential of the electrode potential, the production amount of hypochlorous acid is increased more as the potential increases more in the case where the titanium oxide electrode is a bulk material. On the other hand, in the case where the titanium oxide electrode is a porous body, at a relatively low potential of the electrode potential, the production amount of hypochlorous acid is almost constant. When the electrode potential becomes high, in the case where the titanium oxide electrode is a porous body, the production amount of hypochlorous acid is increased sharply and finally exceeds far beyond the amount in the case where the titanium oxide electrode is a bulk material. In addition, in the case where the titanium oxide electrode is a bulk material, when the electrode potential becomes high, the production amount of hypochlorous acid is contrarily lowered. It starts again increasing, however it is far less than that in the case of a porous body.

The reason for that the hypochlorous acid production amount of the porous body is increased in the case where the potential is high is supposed because the porous body has a wider surface area than a bulk material and allows solution permeation and its electric resistance is high.

A material of the counter electrode is not particularly limited and commonly used materials having a low oxygen overpotential or a large surface area, such as carbon, platinum, copper-platinum, or the like may be properly used.

As the metal chloride, sodium chloride (NaCl) is representative and potassium chloride (KCl), or the like, may be used.

The dissolved oxygen amount in the electrolyte solution is more preferable as it is closer to the saturated concentration to increase the production efficiency of hypochlorous acid.

The metal chloride concentration in the electrolyte solution is preferably 0.01 to 1 mol/L. It is because if the concentration is too low, the production efficiency of hypochlorous acid is lowered and on the other hand, if the concentration is too high, the single electrode potential becomes high and the electromotive force difference becomes low to result in decrease f the electrolysis current.

Although the light irradiating the titanium oxide electrode in the electrolyte solution may be visible light alone, light including ultraviolet rays is also usable and it is better to select the light in accordance with the type of titanium oxide, which is a photocatalytic substance.

In the case where the electrolyte solution is an aqueous K₂SO₄ solution, hypochlorous acid is not produced even if a photoelectric cell in the solution is irradiated with light. It is because there is no chloride ion in the solution. However, after light is irradiated for a prescribed time, the light irradiation is stopped and KCl is added to the solution. Consequently, although light is not irradiated, hypochlorous acid is produced. It is supposed because during the light irradiation, a substance capable of oxidizing a chloride ion is produced. Accordingly, also in the hypochlorous acid synthesis method and apparatus of the present invention, it is supposed that a strong oxidizing agent with high oxidizing power such as ozone and hydrogen peroxide is secondarily produced together with hypochlorous acid.

### EFFECT OF THE INVENTION

The hypochlorous acid synthesis method and apparatus of the present invention, it is made possible to continuously produce hypochlorous acid from a metal chloride by employing a photoelectric cell for producing hypochlorous acid and supplying oxygen to a counter electrode of the photoelectric cell with no need of an electric power source or using an economical electric power source such as solar cell. Accordingly, the facility cost and operation cost required for producing hypochlorous acid can be remarkably decreased. Further, the photoelectric cell is immersed in an electrolyte solution and hypochlorous acid is produced in the electrolyte solution, so that in the case where the electrolyte solution and an object to be treated are same just like swimming pool water, the apparatus can be placed in the object to be treated, a facility structure including a pipeline system can be remarkably simplified and from this point of view, the cost can be saved.

### BEST MODE FOR CARRYING OUT THE INVENTION

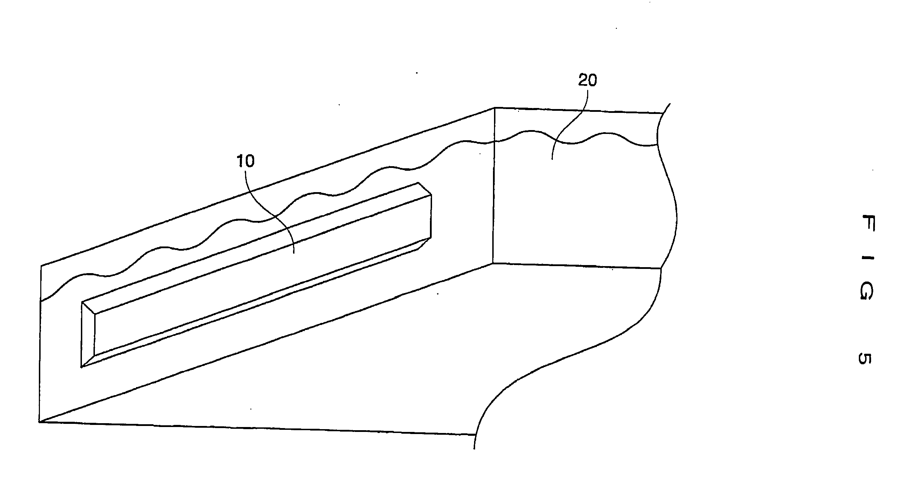

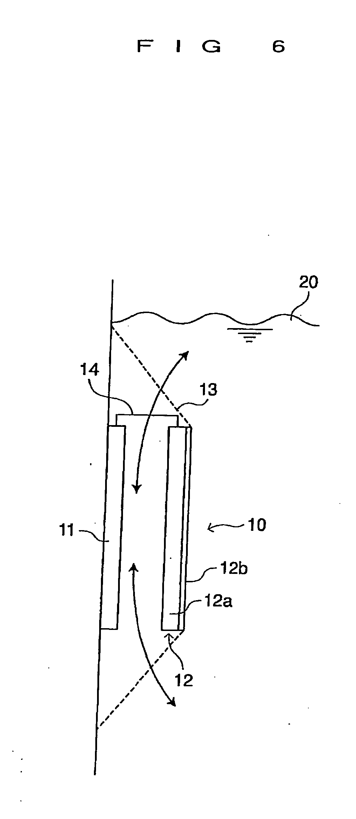

Hereinafter, embodiments of the present invention will be described with reference to drawings. Fig. 5 is a perspective view of a hypochlorous acid synthesis apparatus showing one embodiment of the present invention and Fig. 6 is a vertically cross-sectional side view of the hypochlorous acid synthesis apparatus.

The hypochlorous acid synthesis apparatus of this embodiment is a disinfection and sterilization apparatus of swimming pool water 20 by hypochlorous acid, and has a transversely long plate-like shape and attached to the inner side face under the water surface in the swimming pool. A hypochlorous acid synthesis apparatus 10 comprises a transversely long plate-like counter electrode 11 working also as an installation base, a titanium oxide electrode 12 combined with the front face side of the counter electrode 11 at a prescribed interval, and a cover 13 covering them. The counter electrode 11 and the titanium oxide electrode 12 are electrically connected with a conductive wire 14 in the cover 13 to compose a photoelectric cell.

The counter electrode 11 is a transversely long graphite plate. The titanium oxide electrode 12 has a layered structure formed by coating the surface of a substrate 12a which is transversely long same as the counter electrode 11 with a TiO₂ film 12b. The substrate 12a is, for example, a Ti plate or an iron plate or the like. The cover 13 protects the photoelectric cell in the inside and at the same time protects swimmers. The cover 13 is made of a transparent resin or the like to efficiently introduce light to the entire body of the TiO₂ film 12b and has a large number of water flow holes to allow swimming pool water 20 to freely flow in and out in the cover 13 and pass between the counter electrode 11 and the titanium oxide electrode 12 in the cover 13.

In the case where the spool is an outdoor swimming pool, the hypochlorous acid synthesis apparatus 10 is better to be installed southward so as to efficiently irradiate sunlight to the synthesis apparatus.

Next, the functions of the hypochlorous acid synthesis apparatus 10 of this embodiment will be described.

The swimming pool water 20 contains a relatively high concentration of NaCl since sweat or the like of swimmers is dissolved. That is, the swimming pool water 20 is a kind of aqueous NaCl solution and an electrolyte solution and the pool is a container. In the swimming pool, the water surface is wide as compared with the depth and air is easy to be dissolved in the water from the water surface and further the water is stirred so fiercely as to generate foams by swimmers. Therefore, a large quantity of air is contained in the swimming pool water 20 and oxygen molecules are dissolved.

In the outdoor swimming pool, sunlight comes to the surface of the titanium oxide electrode 12 of the hypochlorous acid synthesis apparatus 10 in this state. In the case of an indoor swimming pool, irradiating light is irradiated. Accordingly, as described above, the photoelectric cell is activated by photo-semiconductive effect, NaCl in the swimming pool water 20 is decomposed, hypochlorous acid is generated on the titanium oxide electrode 12 side and oxygen (O₂) is consumed on the counter electrode 11 side.

Hypochlorous acid generated in such a manner by the hypochlorous acid synthesis apparatus 10 is widely diffused in the entire swimming pool. Accordingly, the swimming pool water 20 can be disinfected by hypochlorous acid in the swimming pool without being taken outside of the swimming pool. Moreover, since light energy is used for generating hypochlorous acid, electricity energy for electrolysis is made no need. Along with the production hypochlorous acid, NaCl and oxygen in the swimming pool water 20 are consumed, NaCl is supplemented continuously from swimmers and so is oxygen by swimming in the swimming pool and stirring accordingly. Therefore, hypochlorous acid is continuously generated and swimming pool water is continuously disinfected.

It is allowed to additionally add a stirring apparatus, a bubbling apparatus, and an outside electric power source. As described above, use of the outside electric power source increases the production efficiency of hypochlorous acid. The outside electric power source may be a small and economical type such as a solar cell and even if it is added, the electricity energy quantity needed for electrolysis can be suppressed low.

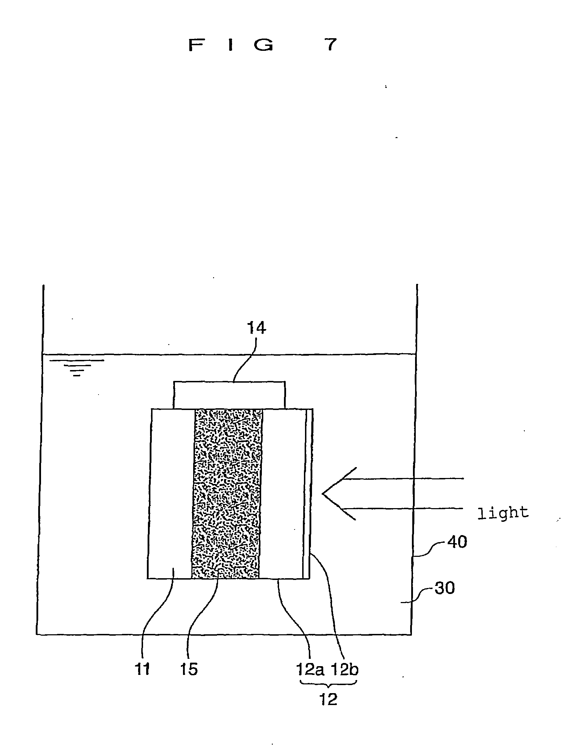

Figs. 7 to 10 are vertical cross-sectional side views of other embodiments of hypochlorous acid synthesis apparatus of the present invention. The structural relation of a titanium oxide electrode and a counter electrode will be described with reference to Figs. 7 to 10.

In the hypochlorous acid synthesis apparatus of Fig. 7, the counter electrode 11 and the titanium oxide electrode 12 are electrically connected with the conductive wire 14 and at the same time mechanically connected with an insulating material 15 having liquid permeability. This photoelectric cell is immersed in an electrolyte solution 30 in a container 40, light energy is applied to the surface of the titanium oxide electrode 12 and hypochlorous acid is generated on the titanium oxide electrode 12 side. That oxygen is supplied to the counter electrode 11 side by bubbling, stirring or the like and that the reaction efficiency is improved by circulating the electrolyte solution 30 between the counter electrode 11 and the titanium oxide electrode 12 are as described above.

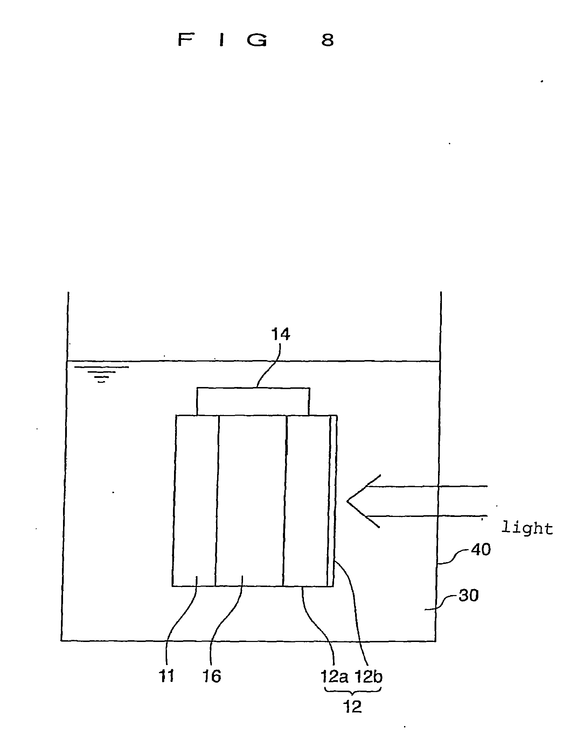

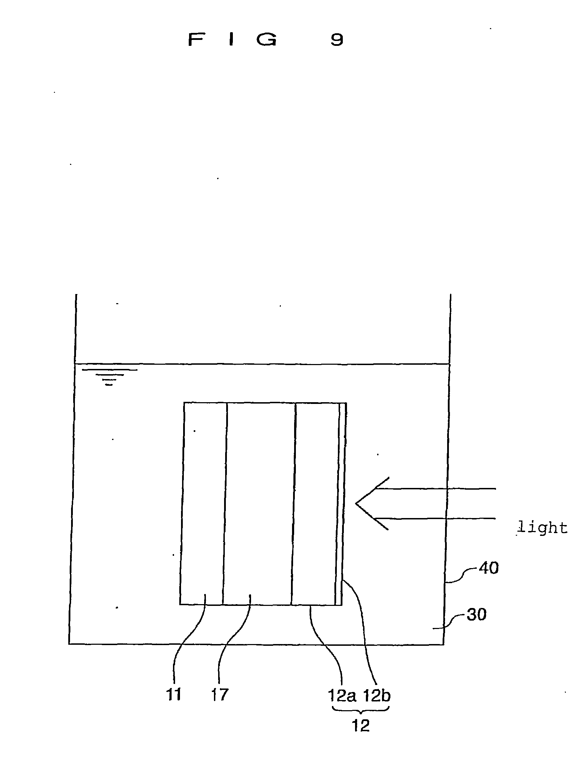

In the hypochlorous acid synthesis apparatus of Fig. 8, the counter electrode 11 and the titanium oxide electrode 12 are mechanically connected with a dense insulating material 16 having no liquid permeability. Further, in the hypochlorous acid synthesis apparatus of Fig. 9, the counter electrode 11 and the titanium oxide electrode 12 are connected with a conductive plate material 17 having a prescribed resistance. As in these embodiments, it is not necessarily needed to circulate the electrolyte solution 30 between the counter electrode 11 and the titanium oxide electrode 12.

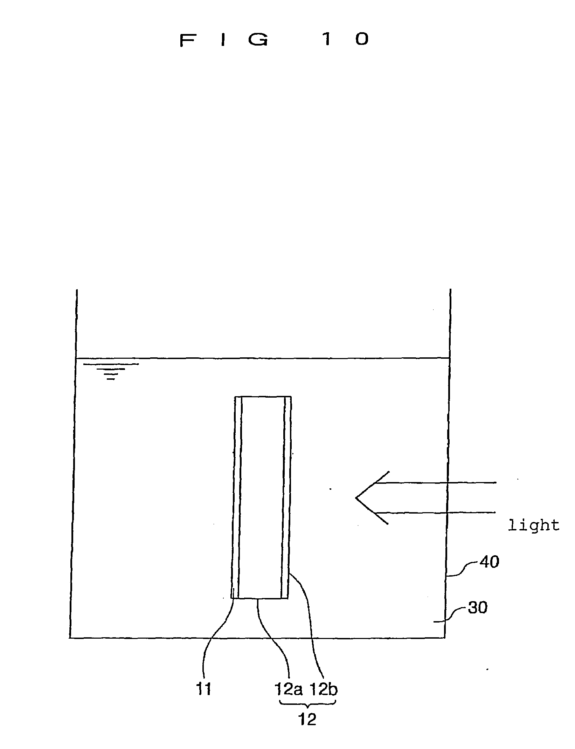

In the hypochlorous acid synthesis apparatus of Fig. 10, the rear face of the titanium oxide electrode 12 is coated with a conductive material such as carbon as the counter electrode 11. Just like this case, the counter electrode 11 and the titanium oxide electrode 12 may be closely attached. That is, it is not necessarily need to keep a gap between them.

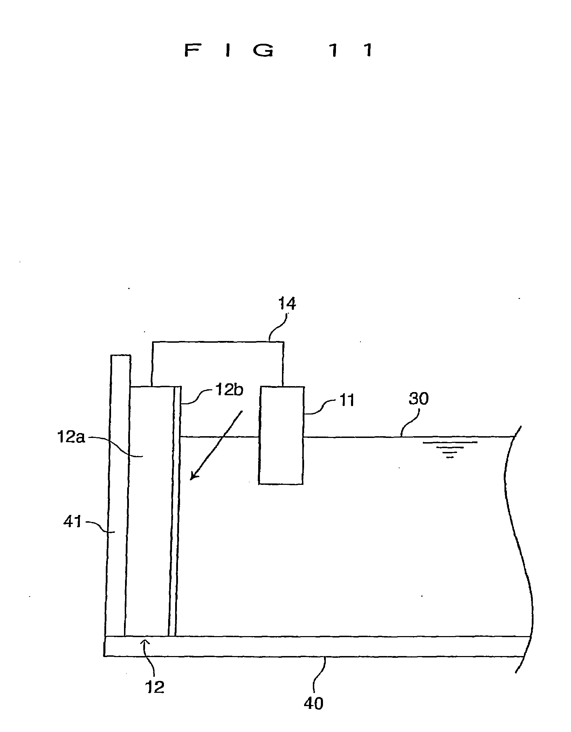

Figs. 11 to 13 are also vertical cross-sectional side views of other embodiments of hypochlorous acid synthesis apparatus of the present invention. The structure of the titanium oxide electrode, particularly the structural relation of the inner face, which is an installation part, and the titanium oxide electrode will be described in detail.

In the hypochlorous acid synthesis apparatuses of Fig. 5 and Fig. 6, the counter electrode 11 is installed in the swimming pool inside face, which is an inner face of a container, and the titanium oxide electrode 12 is placed in the inside (solution side) of the counter electrode 11 and it is also allowed to install the titanium oxide electrode 12 in the inner face of a side wall 41 of the container 40 for storing the electrolyte solution 30 and to place the counter electrode 11 in the inside (solution side).

In the hypochlorous acid synthesis apparatus of Fig. 11, the titanium oxide electrode 12 has a layered structure formed by coating the surface of a substrate 12a with a TiO₂ film 12b, which is a photocatalyst, and the inside of the container 40, that is the substrate surface on the solution side, has the TiO₂ film 12b and light is received here. The surface TiO₂ type titanium oxide electrode 12 of which the TiO₂ film faces the solution side may be attached to the side wall inner face of the container 40 (Fig. 11) and may be placed on the surface side of the counter electrode 11 attached to the side wall inner face of the container (Fig. 5 and Fig. 6). In the former case, the counter electrode 11 is placed on the light receiving side of the titanium oxide electrode 12 and it is preferable that the counter electrode 11 is made of a mesh, a wire material, or the like, so as not to shield light.

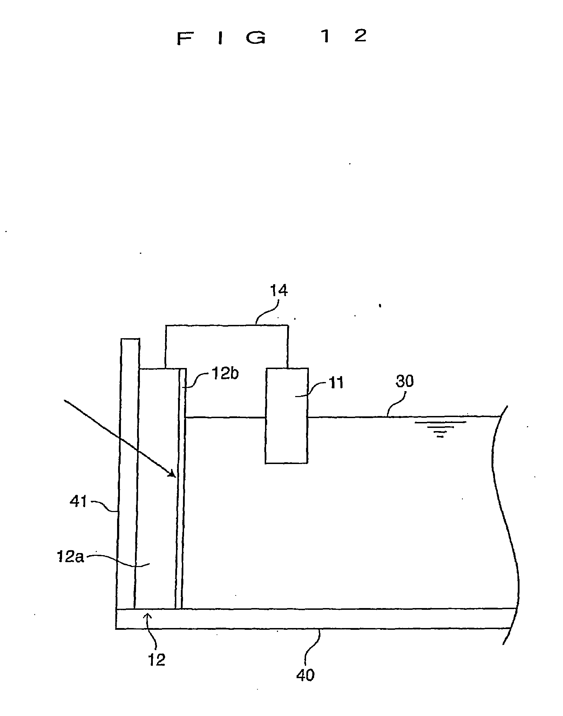

In the hypochlorous acid synthesis apparatus of Fig. 12, the titanium oxide electrode 12 has a layered structure formed by coating the surface of a conductive and transparent substrate 12a with a TiO₂ film 12b and has the TiO₂ film 12b on the substrate surface in the inside of the container, that is, the solution side. Light passes through the transparent side wall 41 of the content 40 and is irradiated to the TiO₂ film 12b of the solution side through the transparent substrate 12a. That is, the titanium oxide electrode 12 is a surface TiO₂ type in which the TiO₂ film faces to the solution side and simultaneously a rear face light receiving type having the transparent substrate 12a and receiving light from the rear face side where the TiO₂ film 12b is not formed.

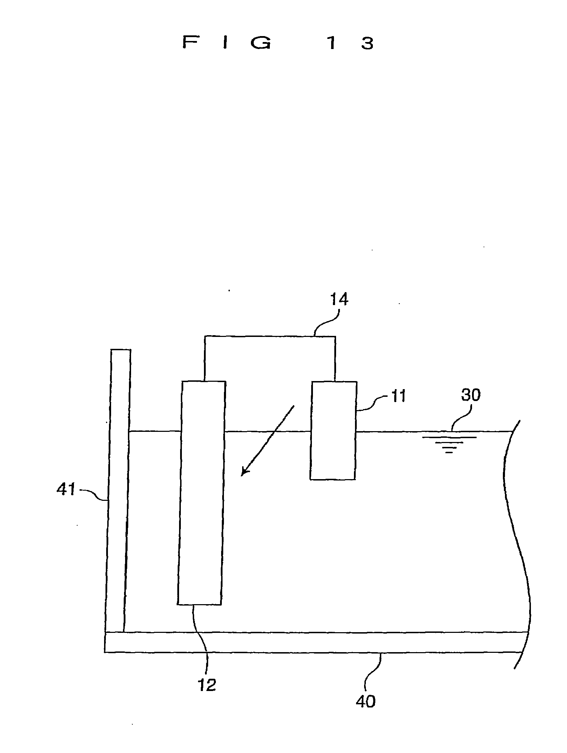

In the hypochlorous acid synthesis apparatus of Fig. 13, in the case where the titanium oxide electrode 12 is a TiO₂-bearing type obtained by coating both faces or one face of a porous material of a sintered body of titanium powder such as a spherical titanium powder or the like with TiO₂ and bearing the TiO₂ on even in the inside of the substrate. In the case where the counter electrode 11 is placed on the light receiving side of the titanium oxide electrode 12 of the TiO₂-bearing type, the counter electrode 11 is preferable to be made of a mesh, a wire material, or the like so as not shield the light.

The hypochlorous acid synthesis apparatus having the surface TiO₂ type titanium oxide electrode facing to the TiO₂ film solution side is efficient for purifying water and preventing algae propagation and more particularly, it is efficient for disinfecting grime in a sink of a lavatory, disinfecting a dish washer, and sterilizing a water purifier (all hereinbefore, water purification) and also for preventing adhesion of barnacle to ships, preventing algae prevention in water line parts of bridge footings, and preventing algae in quay sides and pond walls (all hereinbefore, algae prevention).

Further, the hypochlorous acid synthesis apparatus having the rear face light-receiving type titanium oxide electrode is also efficient for purifying water and preventing algae and it is more particularly efficient for preventing grime adhesion in bathtubs, decomposing adhesion matter in glass boards, and purifying bathtub covers (all hereinbefore, water purification), preventing algae on glass of aquariums and cisterns, and preventing algae on hydrophilic glass (all hereinbefore, algae prevention).

The hypochlorous acid synthesis apparatus having the TiO₂-bearing type titanium oxide electrode bearing TiO₂ in the porous substrate inside is also efficient for water purification and algae prevention and it is more particularly efficient for sterilization in laundering machines and purification in filters for water (all hereinbefore, water purification) and algae prevention in filters for water (all hereinbefore, algae prevention).

### Examples

Finally, Examples for proving the efficaciousness of the present invention will be described.

### (Example 1)

A 500-mL beaker was loaded with 200 mL of an aqueous 0.6 g/L sodium chloride solution (salt water). A photoelectric cell using as a titanium oxide electrode, a sintered plate (size 50 mmW × 50 mmL × 0.5 mmt, powder particle diameter 45 µm or smaller) made of a spherical titanium powder and coated with TiO₂ on both faces by CVD coating and as a counter electrode, a charcoal piece (size about 20 mm diameter × 50 mmL) was immersed in the aqueous solution and light was irradiated to the titanium oxide electrode of the photoelectric cell from the outside of the beaker by a black light.

In the case where the aqueous solution in the beaker was kept in a static state, immediately after light irradiation, an electric current of 60 µA flowed from the counter electrode, which is a cathode, to the titanium oxide electrode, which is an anode, through a circuit in the outside of the circuit and hypochlorous acid was generated from the titanium oxide electrode. At that time, even if the aqueous solution in the beaker was stirred with a glass rod, the above-mentioned electric current value was scarcely changed. After 72 hours, the above-mentioned electric current value was lowered to about 1 µA and the generation amount of hypochlorous acid was decreased to almost 0. Therefore, the aqueous solution in the beaker was stirred with a glass rod. As a result, the electric current value was recovered to an electric current value of 60 µA and the generation amount of hypochlorous acid was recovered.

### (Example 2)

A 200-mL beaker was loaded with 150 mL of an aqueous 3.5 g/L sodium chloride solution (salt water). A photoelectric cell using as a titanium oxide electrode, a sintered plate (size 50 mmW × 50 mmL × 0.5 mmt, powder particle diameter 45 µm or smaller) made of a spherical titanium powder and coated with TiO₂ on both faces by CVD coating and as a counter electrode, a graphite plate (size 50 mmW × 50 mmL × 5 mmt) was immersed (immersion depth 40mm) in the aqueous solution and light was irradiated to the titanium oxide electrode of the photoelectric cell from the outside of the beaker by a black light. The irradiation intensity was same as that of Example 1.

Reaction was continued for 17 hours to produce 0.55 mg/L of hypochlorous acid. The concentration of hypochlorous acid was measured with a DPD reagent. Stirring was not particularly carried out. Oxygen supply to the counter electrode was supposedly carried out by dissolved oxygen in the aqueous solution and dissolution of oxygen in the solution from the solution surface for supplementing the consumption.

### (Example 3)

In the experiment apparatus used in Example 2, a potentiostat for impressed current was inserted into the outside circuit of the photoelectric cell and the electrode potential was variously set. An AgCl electrode was employed as a reference electrode. The concentration of the aqueous sodium chloride solution (salt water) was 1.8 g/L and the current flowing reaction time was 30 minutes. For comparison, an experiment using as the titanium oxide electrode, a titanium plate (size 50 mmW × 50 mmL × 1 mmt) coated with TiO₂ on both faces by CVD coating was also carried out. The immersion depth was adjusted to be 40 mm. The production amount of hypochlorous acid was obtained by measuring the hypochlorous acid concentration of the aqueous solution after reaction with a DPD reagent. In the respective cases of using the titanium plate and the spherical titanium powder-sintered plate as the titanium oxide electrode, the relation of electrode potential and hypochlorous acid generation amount is shown in Table 1.

**[ Table 1]**

| set potential (V vs AgCl) | hypochlorous acid concentration (mg/L) | |
|---|---|---|
| | titanium plate | titanium powder sintered body |
| 0 | 0.17 | 0.04 |
| 0.4 | 0.61 | 0.05 |
| 0.8 | 0.57 | 0.03 |
| 1.2 | 0.6 | 0.1 |
| 1.5 | 0.06 | 0.08 |
| 2 | 0.21 | 0.1 |
| 2.5 | 0.32 | 0.11 |
| 3 | | 0.84 |
| 3.5 | | 1.5 |
| short-circuiting time | 0.04 | 0.04 |
| (potential) | (-0.11 V) | (-0.15 V) |

In the case where the titanium oxide electrode was a TiO₂-coated titanium plate and under short-circuiting state without an outside electric power source, the electrode potential was -1.1 V and the production amount of hypochlorous acid was 0.04 mg/L. As the electrode potential was increased step by step from 0 V to 0.4 V, 0.8 V, and 1.2 V by the outside electric power source and the applied electricity quantity was increased, the production amount of hypochlorous acid was increased to 0.6 mg/L at highest. When the electrode potential reached 1.5 V, the production amount of hypochlorous acid was lowered to 0.06 mg/L. It is supposedly attributed to that the main of the reaction was shifted to water electrolysis. If the electrode potential was increased further to 2.0 V and 2.5 V, the production amount of hypochlorous acid started again increasing. Herein, the production of an oxidizing agent (ozone, hydrogen peroxide, and the like) and chlorine gas other than hypochlorous acid is supposed to be possible.

In the case where the titanium oxide electrode was a TiO₂-coated titanium powder-sintered plate and under short-circuiting state without an outside electric power source, the electrode potential was -1.5 V and the production amount of hypochlorous acid was 0. 04 mg/L. As the electrode potential was increased step by step from 0 V to 0.4 V, 0.8 V, and 1.2 V by the outside electric power source and the applied electricity quantity was increased, the production amount of hypochlorous acid was increased. However, the production amount was at highest 0.1 mg/L at the time of 1.2 V and it was less than that in the case of using the TiO₂-coated titanium plate. Even if the electrode potential was increased to 2.5 V, the production amount of hypochlorous acid was increased to merely 0.11 mg/L. However, if the electrode potential was increased to 3.0 V, the production amount of hypochlorous acid was increased to 0.84 mg/L and in the case of 3.5 V, it was increased to 1.5 mg/L. That is, a remarkably high quantity of hypochlorous acid was produced as compared with that of the case of using the TiO₂-coated titanium plate as the titanium oxide electrode.

It is made apparent that the impressed current by the outside electric power source is effective for the porous titanium oxide electrode.

### BRIEF DESCRIPTION OF THE DRAWINGS

Fig. 1 is a schematic view showing a cell/electrolysis reaction by a hypochlorous acid synthesis method of the present invention.
Fig. 2 is a graph showing a cell/electrolysis reaction by the hypochlorous acid synthesis method of the present invention.
Fig. 3 is a schematic view showing a cell/electrolysis reaction by another hypochlorous acid synthesis method of the present invention.
Fig. 4 is a graph schematically showing the relation of electrode potential and the production amount of hypochlorous acid in the case of using no outside electric power source (short-circuit state) and in the case of using an outside electric power source.
Fig. 5 is a perspective view of a hypochlorous acid synthesis apparatus showing one embodiment of the present invention.
Fig. 6 is a vertical cross-sectional side view of the hypochlorous acid synthesis apparatus.
Fig. 7 is a vertical cross-sectional side view of a hypochlorous acid synthesis apparatus of another embodiment of the present invention.
Fig. 8 is a vertical cross-sectional side view of a hypochlorous acid synthesis apparatus of another embodiment of the present invention.
Fig. 9: A vertical cross-sectional side view of a hypochlorous acid synthesis apparatus of another embodiment of the present invention.
Fig. 10 is a vertical cross-sectional side view of a hypochlorous acid synthesis apparatus of another embodiment of the present invention.
Fig. 11 is a vertical cross-sectional side view of a hypochlorous acid synthesis apparatus of another embodiment of the present invention.
Fig. 12 is a vertical cross-sectional side view of a hypochlorous acid synthesis apparatus of another embodiment of the present invention.
Fig. 13 is a vertical cross-sectional side view of a hypochlorous acid synthesis apparatus of another embodiment of the present invention.
Fig. 14 is a schematic view showing a cell/electrolysis reaction by a photocatalyst.

### EXPLANATION OF SYMBOLS

- 1: titanium oxide electrode
- 2: counter electrode
- 3: active material
- 4: outside circuit
- 5: outside electric power source
- 10: hypochlorous acid synthesis apparatus
- 11: counter electrode
- 12: titanium oxide electrode
- 14: conductive wire
- 20: swimming pool water
- 30: electrolyte solution
- 40: container
- 41: side wall

## Claims

1. A hypochlorous acid synthesis method, in which a photoelectric cell having a titanium oxide electrode and a counter electrode is placed in an electrolyte solution containing a metal chloride, and the titanium oxide electrode is irradiated with light while oxygen is supplied to the counter electrode of the photoelectric cell in the electrolyte solution, thereby HClO (hypochlorous acid) or ClO⁻ (hypochlorite ion) is generated from the titanium oxide electrode.

2. The hypochlorous acid synthesis method according to claim 1, wherein the electrolyte solution is stirred and/or gas is bubbled through the electrolyte solution in order to supply oxygen to the counter electrode of the photoelectric cell.

3. The hypochlorous acid synthesis method according to claim 1, wherein said photoelectric cell has an outside electric power source for impressed current in an outside circuit electrically connecting the titanium oxide electrode and the counter electrode.

4. The hypochlorous acid synthesis method according to claim 3, wherein the titanium oxide electrode of the photoelectric cell is a complex obtained by coating a base of a metal porous body with titanium oxide.

5. The hypochlorous acid synthesis method according to claim 4, wherein the metal porous body is a spherical titanium powder-sintered body.

6. A hypochlorous acid synthesis apparatus for producing hypochlorous acid (HClO) or a hypochlorite ion (ClO⁻) from a metal chloride, comprising:
a container for storing an electrolyte solution containing the metal chloride, and
a photoelectric cell having a titanium oxide electrode and a counter electrode and immersed in the electrolyte solution in the container under an environment in which the titanium oxide electrode is irradiated with light and oxygen is supplied to the counter electrode.

7. The hypochlorous acid synthesis apparatus according to claim 6, wherein means for supplying oxygen to the counter electrode of the photoelectric cell is stirring of the electrolyte solution and/or gas bubbling through the solution.

8. The hypochlorous acid synthesis apparatus according to claim 6, wherein the photoelectric cell comprises an outside electric power source for impressed current in an outside circuit electrically connecting the titanium oxide electrode and the counter electrode.

9. The hypochlorous acid synthesis apparatus according to claim 8, wherein the titanium oxide electrode for the photoelectric cell is a complex obtained by coating a base of a metal porous body with titanium oxide.

10. The hypochlorous acid synthesis apparatus according to claim 9, wherein the metal porous body is a spherical titanium powder-sintered body.
